# EUROPÄISCHE PATENTSCHRIFT

(11) **EP 0 887 388 B1**
(45) Veröffentlichungstag und Bekanntmachung des Hinweises auf die Patenterteilung: **06.08.2003**
(21) Anmeldenummer: 98108863.6
(22) Anmeldetag: 15.05.1998
(51) Int. Cl.: C09D 4/00, C08F 222/10, C09J 7/02

(54) **Beschriftbare Lackbeschichtung für Klebebänder**
Inscribable coatings for adhesive tapes
Revêtements aptes au marquage pour des rubans adhésifs

(30) Priorität: 30.05.1997 DE 19722786
(43) Veröffentlichungstag der Anmeldung: 30.12.1998
(73) Patentinhaber: Tesa AG, 20253 Hamburg (DE)
(72) Erfinder: Karmann, Werner, Dr., 22147 Hamburg (DE); Zöllner, Stephan, Dr., 22089 Hamburg (DE)

(56) Entgegenhaltungen:
- DE-A- 1 569 897
- DATABASE WPI Derwent Publications Ltd., London, GB; AN 87-112941 XP002076130 & JP 62 059 098 A (DYNIC CORP) , 14. März 1987
- CHEMICAL ABSTRACTS, vol. 97, no. 14, 1982 Columbus, Ohio, US; abstract no. 111435, "Writing tools" XP002076322
- DATABASE WPI Derwent Publications Ltd., London, GB; AN 92-311962 XP002076131 & JP 04 216 885 A (SEKISUI CHEM. IND. CO. LTD.) , 6. August 1992

## Beschreibung

Die Erfindung betrifft eine beschriftbare Lackbeschichtung für Klebebänder und seine Verwendung.

### 1. Aufgabe der Erfindung

In Klebebandrollen befindet sich die Haftklebemasse der einen Windung in direktem Kontakt mit der Rückseite der nächsten Windung. Zur Einstellung eines gebrauchsgerechten Abrollverhaltens ist häufig eine Beschichtung auf der Rückseite des Klebebandes - eine sogenannte Releaseschicht - erforderlich.

Bei Produkten, wie einem Büro-Klebefilm, hat diese Beschichtung neben guter Abrollbarkeit eine Reihe weiterer Forderungen zu erfüllen.
- Beschriftbarkeit mit allen verbreiteten Schreibmitteln wie Kugelschreiber, Filzschreibern mit lösungsmittelhaltigen und wäßrigen Tinten, Bleistiften.
- Unsichtbarkeit bei Verklebung auf allen Untergründen und vollkommene Transparenz bei der Wicklung zur Rolle.
- Vermeidung starker elektrostatischer Aufladung beim Abwickeln von der Rolle.

Bisher war es nicht möglich, diese z.T. widersprechenden Eigenschaften mit einer einzigen Beschichtung zu erfüllen, sondern es mußten mindesten 2 Schichten nacheinander aufgebracht werden, was das Herstellungsverfahren wesentlich komplizierte. Es bestand daher die Aufgabe diese Forderungen mit einer einzigen Schicht zu erfüllen.

### 2. Lösung der gestellten Aufgabe

Lack zur Beschichtung von Trägem für Selbstklebebänder (wie Folien, Papiere, Gewebe, Vliese), der Beschriftbarkeit (mit Kugelschreibern, lösungsmittelhaltigen und wäßrigen Filzschreibern und ggf. Bleistiften) und gute Abrollbarkeit auch nach Lagerung insbesondere bei erhöhten Temperaturen aufweist.

Der Lack ist dadurch gekennzeichnet, daß er aus einer Mischung von di- und mono-funktionellen (Poly)ethylenglykol(meth)acrylaten, multifunktionellen Vernetzem, einem oder mehreren Photoinitiatoren und ggf. mikrofeinen Füllstoffen besteht, mit oder ohne Zusatz von Lösungsmitteln auf die Träger aufgetragen und durch UV-Strahlung gehärtet wird.

Der erfindungsgemäße Lack besteht aus folgenden Komponenten:
A 40-95 % (vorzugsweise 50-80 %) Polyethylenglykol-di(meth)acrylaten mit Molekulargewichten von etwa 400 bis ca. 1000
B. 5-50 % (vorzugsweise 10-30 %) Ethylenglykokolmono(meth)acrylat oder Polyethylenglykol-mono(meth)acrylat mit Molekulargewichten von 120 bis ca. 1000 als Mono(meth)acrylaten
C. 0-30 % (vorzugsweise 2-15 %) mehrfunktionelle Ester mit mindestens 3 (Meth)acrylsäuregruppen als Vernetzern
D. 0,5-5 % (vorzugsweise 1-3 %) Benzildimethylketal, α-Hydroxyketone, Phosphinoxid als Photoinitiatoren
E. 0-6% (vorzugsweise 0-3%) mikrofeine Füllstoffe wie Polyamid-Pulver, Polymethylmethacrylatkugeln oder Kieselgel.
F. Ggf. Lösungsmittel im Verhältnis bis 5:1 zum Lack

A dient zur Filmbildung.
B verbessert Beschriftbarkeit und das Abrollverhalten, macht aber den Film weich und reduziert die Reaktionsgeschwindigkeit
C erhöht Reaktionsgeschwindigkeit und Filmhärte, verschlechtert aber Abrollbarkeit und Beschriftbarkeit insbesondere mit Filz- und Faserschreibern.
D startet die radikalische Härtungsreaktion unter Einwirkung von UV-Strahlung
E erzeugt die Beschriftbarkeit mit Bleistift.
F verringert die Viskosität und führt unter bestimmten Bedingungen zu einer Verbesserung der Oberflächenstruktur.

Die Komponenten B und C können so auf einander abgestimmt werden, daß ausreichende Beschriftbarkeit, Filmhärte, Härtungsgeschwindigkeit und Abrollbarkeit erreicht wird. Bei geeigneter Abstimmung kann auf das Aufbringen einer zusätzlichen Releasebeschichtung zur Einstellung leichter Abrollbarkeit verzichtet werden.

Methacrylate verlangsamen die Härtungsgeschwindigkeit signifikant.

Zusätzliche Beschriftbarkeit mit Bleistift kann durch einen Zusatz von mikrofeinen Füllstoffen erreicht werden. Durch Verwendung von Lösungsmittelzusätzen kann die Oberflächenrauhigkeit weiter erhöht werden, wodurch die Bleistiftbeschriftbarkeit weiter verbessert wird. Die durch den Füllstoff verringerte Transparenz der Schicht wird bei der Wicklung zur Rolle von der auf diese Schicht auffließende Klebemasse wieder ausgeglichen. Eine Rolle mit dieser Lackschicht ist trotz rauher Oberfläche vollkommen transparent.

### 3. Experimentelle Befunde zur Abstützung der Erfindung

Zur Beurteilung der Muster wurden die folgenden Prüfverfahren angewandt:

### Aushärtung:

Die Oberfläche ist klebfrei, und leichtes Reiben mit den Fingern hinterläßt keine erkennbaren Spuren.

### Oberflächenhärte:

Beurteilung nach Verhalten gegenüber dem Beschreiben mit Kugelschreiber:
1 kein Ritzen
2 schwaches Ritzen
3 die Oberfläche wird aufgerissen.

### Abziehbarkeit:

Die Beschichtung wurde mit einem handelsüblichen Bürofilm mit Acrylatklebemasse (tesa Multifilm) überklebt. Nach Lagerung von 1 bzw. 7 Tagen bei 60°C wurde der Film abgezogen. Das Verhalten wurde folgendermaßen charakterisiert:
1 ohne Rückstände leicht abziehbar
2 ohne Rückstände ausreichend leicht abziehbar
3 ohne Rückstände schwer abziehbar
R Rückstände

### Beschreibbarkeit

A Die Beschichtung wurde mit Kugelschreiber sowie lösungsmittelhaltigen und wäßrigen Faserstiften beschrieben. Die Beurteilung wurde folgendermaßen charakterisiert:
   1 guter Verlauf, wischfest nach ≤ 15 sec
   2 guter Verlauf, wischfest nach ≤ 45 sec
   3 schlechter Verlauf und/oder nicht wischfest nach > 45 sec.
B Beschreibbarkeit mit einem Bleistift der Härte HB:
   1 deutliche Schreibspur
   2 schwach erkennbare Spur
   3 keine erkennbare Spur

### Transparenz:

Die Transmisson der Beschichtung im Wellenlängenbereich von 400 bis 700 nm wurde direkt, und nach Aufkleben eines Streifens Multifilm® mit dem Photometer Lico 200 der Firma Dr. Lange gemessen.

### Beispiele I - XII

Die folgende Rohstoffen wurden in der angegebenen Reihenfolge vermischt.

| Beispiel: | **I** | **II** | **III** | **IV** | **V** | **VI** |
|---|---|---|---|---|---|---|
| Sartomer SR 344 | 87 | 79 | 67 | 67 | | |
| Sartomer SR 610 | | | | | 67 | 87 |
| HEMA | 10 | 20 | 20 | | | 10 |
| Bisomer PEM6E | | | | 30 | 30 | |
| DPHA | | 3 | 10 | | | |
| Irgacure 184 | 3 | 3 | 3 | 3 | 3 | 3 |
| Härtung: | 2x | 2x | 2x | 3x | 3x | 3x |

| Ergebnisse der Prüfungen: | | | | | | |
|---|---|---|---|---|---|---|
| Oberflächenhärte | 2 | 2 | 1,5 | 2 | 2 | 2 |
| Abziehbarkeit nach 24h | 2 | 2 | 3 | 2 | 2 | 3 |

| Beispiel: | **VII** | **VIII** | **IX** | **X** | **XI** | **XII** |
|---|---|---|---|---|---|---|
| Sartomer SR 344 | 72 | | 73 | 92 | 75 | 72 |
| Sartomer SR 610 | | 79 | | | | |
| HEMA | 20 | 15 | 18 | | | |
| Blemmer AE350 | | | | 5 | 15 | 20 |
| DPHA | 5 | 3 | 6 | | 7 | 5 |
| Irgacure 184 | 3 | 3 | 3 | 3 | 3 | 3 |
| Härtung: | 2x | 2x | 2x | 1x | 1x | 1x |

| Ergebnisse der Prüfungen: | | | | | | |
|---|---|---|---|---|---|---|
| Oberflächenhärte | 2,5 | 2 | 1 | 2 | 1,5 | 2 |
| Abziehbarkeit nach 24h | 2 | 2 | 2,5 | 2 | 1,5 | 2 |
| Beschreibbarkeit A | 2 | 2 | 2 | 2 | 1,5 | 1,5 |
| Beschreibbarkeit B | | | | | 3 | |

Sartomer SR 344 und SR 610 sind Polyethylenglykol-diacrylate der Firma Cray Valley / Paris la Défense.
HEMA ist Hydroxyethylmethacrylat
Blemmer AE350 ist Polyethylenglykol-monoacrylat der Firma Nippon Oil and Fats Corp. / Tokyo
DPHA ist Dipentaerythritol-hexaacrylat
Irgacure 184 ist ein Photoinitiator der Firma Ciba-Geigy / Basel

Die Lackmischungen wurden in einer Menge von ca. 50 g/m² auf geprimerte 35 µm BOPP-Folien ausgestrichen.
Unmittelbar anschließend wurden sie mit einer Geschwindigkeit von 10 m/min unter einem handelsüblichen Hg-Mitteldruckstrahler mit einer Leistung von 120 W/cm gehärtet. Zur vollständigen Aushärtung wurden je nach Reaktivität 2 bis 3 Durchgänge benötigt (siehe Zeile "Härtung").

### Beispiele XIII - XVIII

Die mikrofeinen Füllstoffe wurden in den in der Tabelle angegebenen Mengen in der Lack eingerührt und in einer Menge von ca. 10 g/m² auf geprimerte 35 µm BOPP-Folie ausgestrichen. Anschließend wurde die Schicht offen mit einer Geschwindigkeit von 10 m/min unter einem Hg-Mitteldruckstrahler mit einer Leistung von 120 W/cm gehärtet. Wenn der Lack mit den in der Tabelle angegebenen Menge Lösemittel beschichtet wurde, muß die Beschichtung vor der UV-Bestrahlung für 10 min bei 100 °C getrocknet werden

Orgasol ist ultrafeines Polyamidpulver der Firma elf atochem. Die besten Ergebnisse bezüglich Bleistiftbeschriftbarkeit bei gleichzeitig hoher Transparenz wurden mit der Type Orgasol 2001 UD NAT 1 erhalten; dies sind kugelförmige Polyamid 12 Partikel mit einer mittleren Korngröße von 5 µm.

Epostar MA sind farblose kugelförmige Polymethylmethacrylat Teilchen der Firma Nippon Shokubai. Die besten Ergebnisse bezüglich Bleistiftbeschriftbarkeit und Transparenz ergab die Type Epostar MA 1002, Teilchen mit einer mittleren Größe von 2 µm und einem Brechungsindex von 1,49.

Multifilm® ist ein transparenter Klebefilm der Beiersdorf AG, Hamburg.

| **Beispiel** | **XIII** | **XIV** | **XV** | **XVI** | **XVII** | **XVII** I |
|---|---|---|---|---|---|---|
| Sartomer SR 344 | 75 | 75 | 75 | 75 | 75 | 75 |
| Blemmer AE350 | 15 | 15 | 15 | 15 | 15 | 15 |
| DHPA | 7 | 7 | 7 | 7 | 7 | 7 |
| Irgacure 184 | 3 | 3 | 3 | 3 | 3 | 3 3 |
| Orgasol 2001 UD | | | 1 | 1 | 3 | 1 |
| Epostar MA 1002 | 1 | 1 | 3 | 3 | 3 | |
| Lack/Aceton bei der Beschichtung | | 1:3 | | 1:3 | 1:3 | 1:3 |
| Härtung | 1 | 1 | 1 | 1 | 1 | 1 |

| Ergebnisse der Prüfungen | | | | | | |
|---|---|---|---|---|---|---|
| Oberflächenhärte | 1,5 | 1 | 1,5 | 1 | 1 | 1 |
| Abziehbarkeit nach 24 h | 1,5 | 1 | 1,5 | 1 | 1 | 1 |
| Transmission bei 700 nm | 85.3 % | 81.0 % | 85.0 % | 83.7 % | 74.8 % | - |
| Transmission bei 700 nm, überklebt mit tesa Multifilm® | 85.4 % | 85.2 % | 85.4 % | 86.1 % | 85.6 % | - |
| Beschreibbarkeit A | 1,5 | 1,5 | 1,5 | 1,5 | 1,5 | 1,5 |
| Beschreibbarkeit B | 2 | 1,5 | 2 | 1 | 1 | 2 |

Alle Prüfungen wurden nach 24 h Lagerung im Klimaraum vorgenommen.

## Patentansprüche

1. Beschriftbare klare Lackbeschichtung für Klebebänder, **dadurch gekennzeichnet, daß** sie aus einem abgestimmten Gemisch aus
A. 40-95 Gew.Tl (vorzugsweise 50-80 Gew.Tl) Polyethylen-glykol-di(meth) acrylaten mit Molekulargewichten von etwa 400 bis ca. 1000 und
B. 5-50 Gew.Tl. (vorzugsweise 10-30 Gew.TI.) Ethylenglykokol-mono(meth)-acrylat oder Polyethylenglykol-mono(meth)acrylat mit Molekulargewichten von 120 bis ca. 1000 als Mono(meth)acrylaten sowie
C. 0-30 Gew.Tl (vorzugsweise 2-15 Gew.Tl) mehrfunktionelle Ester mit mindestens 3 (Meth)acrylsäure-gruppen als Vernetzern und
D. 0,5-5 Gew.Tl (vorzugsweise 1-3 Gew.Tl) Benzildimethylketal, α-Hydroxyketone, Phosphinoxid als Photoinitiatoren besteht.

2. Beschriftbare Lackbeschichtung für Klebebänder nach Anspruch 1, **dadurch gekennzeichnet, daß** sie zur besseren Beschriftbarkeit mit Bleistift zusätzlich bis zu 6 Gew.Tl (vorzugsweise bis zu 3 Gew.Tl) mikrofeine Füllstoffe wie Polyamid-Pulver oder Kieselgel. und ggf. Lösungsmittel im Verhältnis bis 5:1 zum Lack enthält.

3. Beschriftbare Lackbeschichtung für Klebebänder nach Ansprüchen 1 oder 2, **dadurch gekennzeichnet, daß** der mikrofeine Füllstoff aus Polymerkugeln mit mittlerer Teilchengröße von 1 bis 10 µm (vorzugsweise 2 bis 5 µm) besteht

4. Beschriftbare Lackbeschichtung für Klebebänder nach Ansprüchen 1-3, **dadurch gekennzeichnet, daß** sie durch handelsübliche UV-Strahler gehärtet wird, wobei das Lösungsmittel ggf. vorher verdampft wird.

5. Verwendung einer Beschichtung nach einem der Ansprüche 1 - 4 zur Beschichtung von Klebebändern zwecks Beschriftbarkeit und guter Abrollbarkeit.

## Claims

1. Inscribable clear varnish coating for adhesive tapes, **characterized in that** it is composed of a harmonized blend of
A. 40-95 parts by weight (preferably 50-80 parts by weight) of polyethylene glycol di(meth)acrylates having molecular weights from about 400 to about 1000 and
B. 5-50 parts by weight (preferably 10-30 parts by weight) of ethylene glycocol mono(meth)acrylate or polyethylene glycol mono(meth)acrylate having molecular weights from 120 to about 1000, as mono(meth)acrylates, and also
C. 0-30 parts by weight (preferably 2-15 parts by weight) of polyfunctional esters having at least 3 (meth)acrylic acid groups, as crosslinkers, and
D. 0.5-5 parts by weight (preferably 1-3 parts by weight) of benzil dimethyl ketal, α-hydroxy ketones, phosphine oxide as photoinitiators.

2. Inscribable varnish coating for adhesive tapes according to Claim 1, **characterized in that** for better inscribability with pencil it further contains up to 6 parts by weight (preferably up to 3 parts by weight) of microfine fillers such as polyamide powders or silica gel and, where appropriate, solvents in a ratio of up to 5:1 to the varnish.

3. Inscribable varnish coating for adhesive tapes according to Claims 1 or 2, **characterized in that** the microfine filler is composed of polymer beads having an average particle size of from 1 to 10 µm (preferably 2 to 5 µm).

4. Inscribable varnish coating for adhesive tapes according to Claims 1-3, **characterized in that** it is cured by commercially customary UV lamps, the solvent being evaporated beforehand where appropriate.

5. Use of a coating according to one of Claims 1-4 for coating adhesive tapes for the purposes of inscribability and ready unwindability.

## Revendications

1. Revêtement clair de laque, inscriptible pour bandes adhésives, **caractérisé en ce qu'**il est constitué d'un mélange déterminé de
A. 40 à 95 parties en poids (de préférence 50 à 80 parties en poids) de poly(di(méth)acrylates d'éthylèneglycol) présentant un poids moléculaire d'environ 400 à environ 1000 et
B. 5 à 50 parties en poids (de préférence 10 à 30 parties en poids) de mono(méth)acrylate d'éthylèneglycol ou de poly(mono(méth)acrylate d'éthylèneglycol) présentant un poids moléculaire de 120 à environ 1000 comme mono(méth)acrylates, ainsi que
C. 0 à 30 parties en poids (de préférence 2 à 15 parties en poids) d'esters polyfonctionnels présentant au moins 3 groupements acide (méth)acrylate comme réticulants et
D. 0,5 à 5 parties en poids (de préférence 1 à 3 parties en poids) de benzyldiméthylcétal, d'α-hydroxycétone, d'oxyde de phosphine comme photo-initiateurs.

2. Revêtement de laque inscriptible pour bandes adhésives selon la revendication 1, **caractérisé en ce qu'**il contient en outre pour une meilleure aptitude à l'inscription par un crayon jusqu'à 6 parties en poids (de préférence jusqu'à 3 parties en poids) de charges microfines telles qu'une poudre de polyamide ou du gel silicique et le cas échéant un solvant dans un rapport 5:1 par rapport à la laque.

3. Revêtement de laque inscriptible pour bandes adhésives selon les revendications 1 ou 2, **caractérisé en ce que** la charge microfine est constituée de billes de polymère présentant une taille moyenne des particules de 1 à 10 µm (de préférence de 2 à 5 µm).

4. Revêtement de laque inscriptible pour bandes adhésives selon les revendications 1 à 3, **caractérisé en ce qu'**il est durci par des émetteurs de UV usuels du commerce, le solvant étant le cas échéant évaporé au préalable.

5. Utilisation d'un revêtement selon l'une quelconque des revendications 1 à 4 pour le revêtement de bandes adhésives pour une aptitude à l'inscription et une bonne aptitude au déroulement.
